# FASCICULE DE BREVET EUROPEEN

(11) **EP 1 030 195 B1**
(45) Date de publication et mention de la délivrance du brevet: **10.11.2004**
(21) Numéro de dépôt: 00400416.4
(22) Date de dépôt: 14.02.2000
(51) Int. Cl.: G02B 5/12, G02B 6/34, H01S 5/14

(54) **Système optique rétroréflechissant auto-aligné de filtrage en longueur d'onde, monochromateur et laser incorporant un tel système**
Selbstausrichtendes retroreflektierendes optisches System zur Wellenlängenfilterung und dessen Verwendung in Monochromatoren und Lasern
Auto-aligned retroreflecting optical system for wavelength filtering, monochromator and laser using the same

(30) Priorité: 15.02.1999 FR 9901790
(43) Date de publication de la demande: 23.08.2000
(73) Titulaire: NetTest Photonics, 78340 Les Clayes sous Bois (FR)
(72) Inventeur: Lefevre, Hervé, 75014 Paris (FR)
(74) Mandataire: Phélip, Bruno

(56) Documents cités:
- EP-A- 0 801 451
- DE-A- 19 532 611
- FR-A- 2 754 054
- PATENT ABSTRACTS OF JAPAN vol. 011, no. 276 (P-613), 8 septembre 1987 (1987-09-08) & JP 62 075406 A (FUJITSU LTD), 7 avril 1987 (1987-04-07)
- PATENT ABSTRACTS OF JAPAN vol. 006, no. 185 (E-132), 21 septembre 1982 (1982-09-21) & JP 57 099793 A (TOMIJIMA TAKUMI), 21 juin 1982 (1982-06-21)

## Description

La présente invention concerne un système optique rétroréfléchissant auto-aligné de filtrage en longueur d'onde.

Il est bien connu que l'alignement des composants optiques est déterminant pour la qualité des appareils qui les comportent. C'est la raison pour laquelle tout auto-alignement, c'est-à-dire tout montage dans lequel les propriétés du flux lumineux sortant sont peu sensibles à l'orientation ou à la position d'un ou de plusieurs composants, est recherché.

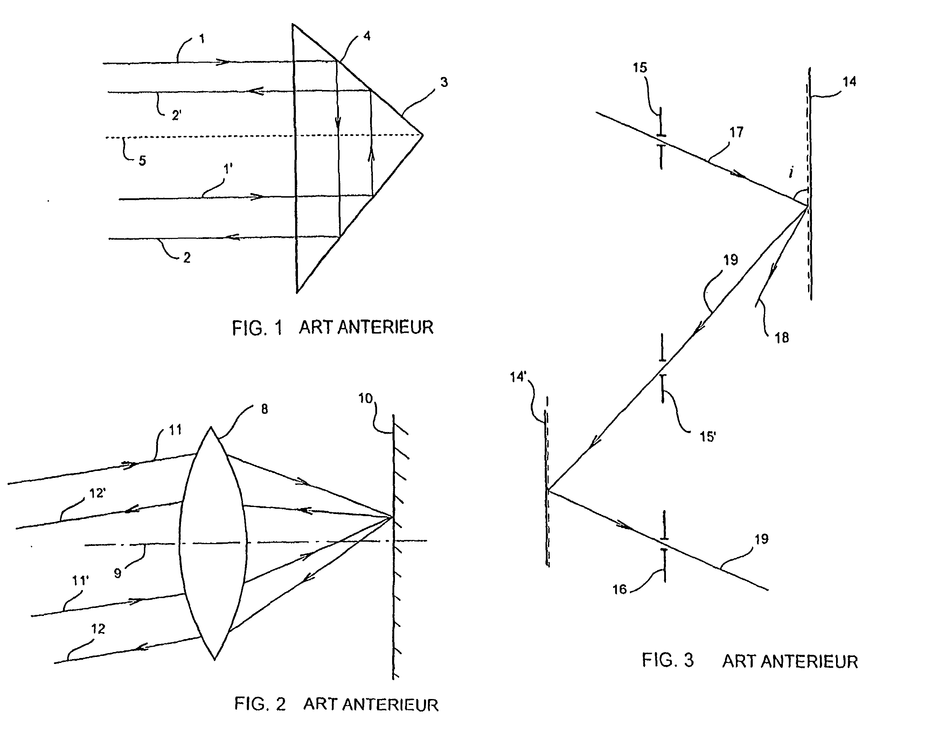

Parmi les systèmes rétroréfléchissants connus de longue date, on citera à titre d'exemple le coin de cube illustré sur la figure 1 avec lequel un faisceau incident 1, 1' sur un trièdre orthogonal réfléchissant 3 produit un faisceau sortant 2, 2' parallèle, quel que soit l'angle d'incidence par rapport à la diagonale 5 du cube et la position du point d'incidence 4.

On connaît également le montage dit " oeil-de-chat " qui est composé d'un système optique convergent 8 d'axe optique 9, dans le plan focal duquel est placé un miroir 10 approximativement perpendiculaire à l'axe 9. Un faisceau incident collimaté 11, 11' converge sur le miroir 10, y est réfléchi et ensuite diverge en retour sur le système optique 8 qui produit un faisceau de sortie 12, 12' également collimaté et parallèle à 11, 11'. Un tel oeil-de-chat est représenté sur la figure 2.

Ces deux systèmes préalablement décrits offrent un auto-alignement de la direction du faisceau de sortie 2, 2' et 12, 12' sur celui d'entrée respectivement 1,1' et 11, 11' dans deux dimensions, c'est-à-dire dans tous les plans parallèles à la direction des faisceaux d'entrée. Dans certains systèmes, on cherchera à réaliser l'auto-alignement dans une seule dimension, on utilisera alors, soit un dièdre orthogonal à la place du trièdre de la figure 1, soit un oeil-de-chat cylindrique, c'est-à-dire une lentille ou un système optique cylindrique à la place du système optique sphérique 8 dans le cas de la figure 2. Le dièdre assure l'auto-alignement dans le plan perpendiculaire à son arête et la lentille cylindrique dans le plan perpendiculaire à sa génératrice. Dans le plan parallèle, ces deux derniers systèmes se comportent comme un miroir.

On connaît par ailleurs des systèmes optiques réalisant un filtrage en longueur d'onde dont les plus classiques, tels que représentés sur la figure 3, sont constitués par un système dispersif 14 placé entre une fente d'entrée 15 et une fente de sortie 16 et recevant un flux lumineux 17 de spectre large sous un angle d'incidence i. Le flux lumineux sortant 18 est étalé, sa direction dépend de la longueur d'onde, et seul le faisceau 19 sélectionné par la fente de sortie 16 est transmis par le système. On peut aussi réaliser un filtrage spectral à deux étages, une fente intermédiaire 15', placée entre deux réseaux 14 et 14' contribuant à limiter la lumière parasite transmise.

On appelle traditionnellement "plan de dispersion " le plan perpendiculaire aux traits du réseau contenant le rayon central du faisceau incident et les rayons centraux des faisceaux dispersés par le réseau. Pour chaque faisceau, on appellera " plan transverse " le plan perpendiculaire au rayon central et " plan longitudinal" le plan perpendiculaire au plan de dispersion contenant le rayon central.

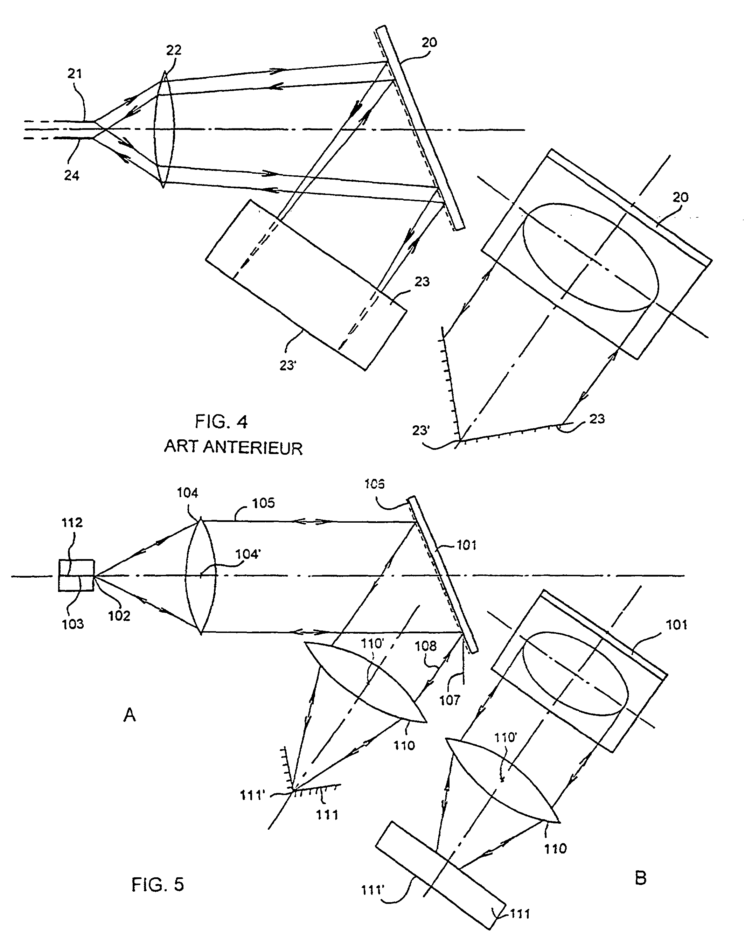

On connaît un dispositif de l'art antérieur, représenté sur la figure 4, où le dièdre 23 orthogonal a une arête 23' parallèle au plan de dispersion, ceci conduit à un comportement miroir dans ce dernier plan et à un comportement auto-aligné dans le plan longitudinal.

Un système optique rétroréfléchissant auto-aligné de filtrage en longueur d'onde peut être utilisé par exemple pour filtrer des longueurs d'onde pour réaliser la cavité externe d'un laser accordable en longueur d'onde ou pour sélectionner une longueur d'onde. C'est dans cette dernière application qu'il est représenté très schématiquement sur la figure 4. Le réseau 20 reçoit un flux lumineux sortant d'un premier guide d'onde optique monomode 21 au travers de la lentille 22. Le réseau 20 le diffracte vers le dièdre orthogonal 23 dont l'arête 23' est parallèle au plan de dispersion du réseau et ce dièdre le renvoie. Le réseau 20 le diffracte de nouveau, au retour, dans une direction dépendant de sa longueur d'onde. Ainsi, seul le flux à une longueur d'onde correspondant à la position du deuxième guide d'onde 24 est couplé dans celui-ci. Ces guides d'onde peuvent être en particulier des fibres optiques.

On a constaté que les performances de ce dernier dispositif sont fortement dépendantes de la précision du dièdre orthogonal. Le but de la présente invention est la réalisation d'un système optique rétroréfléchissant auto-aligné qui permette une bonne tolérance sur les propriétés de ses composants, en particulier sur la valeur de l'angle du dièdre qu'il met en jeu.

Le but de l'invention est de proposer un dispositif qui résolve ce problème tout en conservant les avantages des systèmes auto-alignés connus, le réflecteur ayant un comportement de miroir dans la dimension du plan de dispersion et un comportement auto-aligné dans la dimension du plan longitudinal.

Un autre but de l'invention est de permettre la réalisation d'un montage sélectif en longueur d'onde, à deux étages dans lequel le réglage de la position de la fente intermédiaire soit facilité.

A cet effet, l'invention concerne un système optique rétroréfléchissant auto-aligné à une dimension de filtrage en longueur d'onde comportant :
- au moins un guide d'onde ayant une face intérieure dans le plan focal d'une optique de collimation générant un faisceau collimaté principal,
- un réseau de diffraction ayant des traits parallèles et dispersant angulairement, en des faisceaux collimatés, les différentes longueurs d'onde du faisceau principal dans des directions parallèles au plan de dispersion qui est perpendiculaire aux traits du réseau,
- un système réflecteur générant un auto-alignement dans le plan longitudinal perpendiculaire au plan de dispersion.

Selon l'invention, le réflecteur est composé d'un objectif sphérique et d'un système réflecteur auto-aligné à une dimension, ladite dimension étant parallèle au plan de dispersion du réseau.

Dans différents modes de réalisation présentant chacun des avantages spécifiques :
- il comporte une fibre unique émettant un flux lumineux d'entrée et collectant le flux lumineux de sortie ;
- il comporte au moins deux fibres, l'une émettant un flux lumineux d'entrée, l'autre collectant un flux lumineux de sortie ;
- le système réflecteur auto-aligné à une dimension est un dièdre réflecteur dont l'arête est perpendiculaire au plan de dispersion du réseau et est placée dans le plan focal de l'objectif ;
- le dièdre réflecteur est un prisme à double réflexion interne totale ;
- le dièdre réflecteur forme un angle de 90° approximativement ;
- au moins un des deux miroirs du dièdre réflecteur a des dimensions latérales réduites ;
- le système réflecteur auto-aligné est constitué de deux miroirs perpendiculaires portés sur des supports indépendants l'un de l'autre ;
- chaque miroir a une dimension limitée ;
- la taille des modes des guides d'onde est élargie ;
- un séparateur de polarisation à sorties parallèles est inséré entre l'optique de collimation et le réseau et le centre de l'objectif est positionné au milieu de l'espace séparant les faisceaux de sortie de ce séparateur ;
- un dièdre d'arête horizontal conduit à un passage quadruple sur le réseau, la lumière atteignant le rétroréflecteur auto-aligné après deux passages sur le réseau.

L'invention concerne aussi un monochromateur :
- Dans un premier mode de réalisation, un guide d'onde est passif et forme la fente d'entrée et la fente de sortie du monochromateur.
- Dans un deuxième mode de réalisation, un premier guide d'onde passif forme la fente d'entrée du monochromateur et un deuxième guide d'onde passif forme sa fente de sortie.

L'invention concerne encore un laser incorporant un tel système réflecteur auto-aligné. Dans ce cas un guide d'onde définit un laser à cavité externe accordable en longueur d'onde entre son extrémité et le système réflecteur auto-aligné à une dimension.

L'invention sera décrite plus en détail en référence aux dessins annexés dans lesquels :
- la figure 1 représente un coin de cube constituant un dispositif auto-aligné à deux dimensions de l'art antérieur ;
- la figure 2 représente un oeil-de-chat constituant également un dispositif auto-aligné à deux dimensions de l'art antérieur ;
- la figure 3 représente un dispositif de filtrage spectral de l'art antérieur ;
- la figure 4 représente un dispositif de filtrage spectral auto-aligné à une dimension de l'art antérieur dans une configuration de Littman-Metcalf ;
- la figure 5 est un premier mode de réalisation de l'invention mettant en oeuvre un faisceau en configuration de Littman-Metcalf, selon l'invention ;
- la figure 5A représente un mode de réalisation particulier d'un réflecteur utilisable pour la mise en oeuvre de l'invention ;
- la figure 6 est un dispositif dispersif à double passage sur le réseau, de l'art antérieur ;
- la figure 7 est un dispositif dispersif à double passage sur le réseau, selon l'invention ;
- la figure 8 est un dispositif dispersif à quadruple passage sur la réseau, selon l'invention.

Le système optique rétroréfléchissant auto-aligné de filtrage en longueur d'onde de l'invention comporte un réseau 101. Un guide d'onde monomode 103 émet à son extrémité 102 un flux lumineux qui est collimaté par le système optique 104 de centre 104' en un faisceau principal 105. Le réseau de diffraction plan 101 porte des traits parallèles équidistants 106 qui définissent un plan perpendiculaire approximativement parallèle au faisceau 105 et appelé plan de dispersion du réseau 101.

Le faisceau principal incident 105 est diffracté par le réseau 101, dans le plan de dispersion, et produit des faisceaux diffractés 108 dont la direction dépend de la longueur d'onde. Ces faisceaux sont réfléchis par le système réflecteur auto-aligné à une dimension, ici un dièdre réflecteur 111, en forme de prisme à double réflexion totale, de préférence à 90°, dont l'arête 111' est perpendiculaire au plan de dispersion du réseau et est placée dans le plan focal d'un objectif 110, de centre 110'.

Dans un premier mode de réalisation, le guide d'onde monomode 103 collecte le flux de sortie du système.

Dans un deuxième mode de réalisation, un deuxième guide d'onde 112 collecte le flux de sortie.

Dans le dispositif de l'invention, le dièdre 111 a une arête 111' perpendiculaire au plan de dispersion. Il a donc un comportement miroir dans le plan longitudinal mais le dièdre est associé à l'optique 110, ce qui conduit en fait à un dispositif ayant, dans le plan longitudinal, les propriétés d'un oeil-de-chat et donc à l'auto-alignement recherché. Dans le plan de dispersion, l'association lentille 110/dièdre 111 conduit à un effet équivalent à un miroir qui aurait une normale parallèle à l'axe défini par le centre 110' de la lentille 110 et l'arête 111' du dièdre 111. L'auto-alignement du dièdre s'oppose à celui du coin de cube et les deux effets s'annihilant, on retrouve, dans la dimension perpendiculaire à l'arête du dièdre, un comportement équivalent à un miroir sans auto-alignement.

Par rapport à l'état de l'art antérieur, la précision requise pour l'angle du dièdre de l'invention est réduite.

En effet, un bon auto-alignement nécessite que le front de phase du faisceau réfléchi soit confondu à mieux que λ/4 sur celui du faisceau incident.

En mettant en oeuvre un dièdre selon l'état de l'art antérieur, fonctionnant avec des faisceaux collimatés de quelques millimètres de largeur, il faut une précision d'orthogonalité du dièdre, c'est-à-dire sur la valeur de son angle au sommet de 90°, de l'ordre de 10⁻⁴ rad (soit 5 secondes d'arc). Dans le dispositif de l'invention, le faisceau converge sur le dièdre où se forme l'image du guide d'onde d'entrée. Cette image a une dimension typique de quelques dizaines de micromètres, soit deux ordres de grandeur en dessous du cas précédent.

Pour obtenir la même précision sur l'auto-alignement, la contrainte sur la précision de l'angle du dièdre peut donc alors être relâchée de deux ordres de grandeur et il suffit donc, selon l'invention, d'un dièdre avec une précision sur son angle au sommet de 10⁻² rad (soit 0,5°) au lieu des 10⁻⁴ rad de l'état de l'art.

De plus, on évite ainsi certaines pertes de flux des dispositifs antérieurs. Pour éviter des pertes de flux lors de la mise en oeuvre d'un dispositif antérieur, il est nécessaire que les faisceaux collimatés issus des guides 21 et 24 se superposent sur le dièdre 23. Cela impose que la distance optique entre le dièdre 23 et la lentille 22 soit égale à la distance compensée de l'anamorphose des faisceaux sur le réseau entre cette même lentille 22 et les extrémités des fibres 21, 24, c'est-à-dire égale à la distance focale de la lentille 22 compensée de l'anamorphose des faisceaux sur le réseau. Pour des raisons pratiques d'encombrement, cela n'est pas toujours possible. L'invention permet d'assurer la superposition des faisceaux, indépendamment des distances entre la lentille 104 et le dièdre d'une part, et les extrémités des fibres 103 et 112 d'autre part, en optimisant l'angle du dièdre.

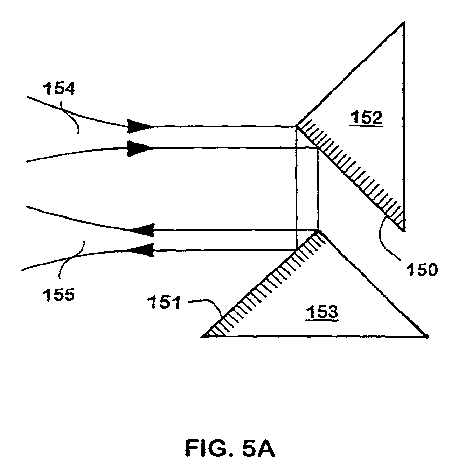

On peut ainsi réaliser un monochromateur, tel que représenté sur la figure 5. Un guide d'onde de sortie 112 collecte, en retour une partie du flux émis par le guide d'onde d'entrée 103 dont la longueur d'onde dépend de la position transversale de ce guide d'onde de sortie 112, des propriétés du réseau 101 et de son orientation. Dans ce cas, l'utilisation d'un dièdre 111 de petites dimensions géométriques permet de limiter l'image de l'extrémité 102 du guide d'onde 103, sur ce dièdre 111 et donc de lui faire remplir la fonction habituelle de la fente intermédiaire d'un double monochromateur (monochromateur à deux étages). On améliore ainsi la sélection spectrale en éliminant la lumière diffusée par le réseau.

Le dièdre 111 peut aussi être constitué de deux miroirs 150 et 151 perpendiculaires l'un à l'autre tels que représentés sur la figure 5A.

Ces miroirs 150, 151 ont avantageusement chacun de petites dimensions et sont portés par des prismes 152 et 153. Il est ainsi possible de régler les positions de ces miroirs 150 et 151, indépendamment l'une de l'autre, et ainsi de contrôler indépendamment les extrémités de la bande passante du filtre ainsi formé. Les faisceaux incident et réfléchi par ce dièdre sont référencés 154 et 155.

Le guide d'onde de sortie 112 peut être confondu avec le guide d'onde d'entrée 103, c'est ce mode de réalisation qui est représenté sur la figure 5. Bien entendu, ces guides peuvent être, matériellement différents et, par exemple, placés l'un à côté de l'autre. Il est également possible de réaliser un démultiplexeur en longueur d'onde en utilisant plusieurs guides d'onde de sortie 112, placés côte à côte, chacun collectant une partie du flux sélectionnée en longueur d'onde, en fonction de sa position.

Si le guide d'onde 103 est un guide d'onde actif utilisé à la fois en entrée et en sortie, on peut réaliser un laser à cavité externe, cette cavité étant formée entre la face arrière du guide d'onde et le dièdre 111.

La taille des modes des guides d'onde est avantageusement élargie, par exemple en disposant des microlentilles à l'extrémité 102 des guides d'onde 103.

Un séparateur de polarisation à sorties parallèles, inséré entre l'optique de collimation 104 et le réseau 101, permet d'échanger les polarisations entre les passages respectivement à l'aller et au retour sur le réseau 101. On élimine ainsi les défauts de polarisation susceptibles d'être introduits par le réseau 101. Le centre 110' de l'objectif 110 est alors positionné au milieu de l'espace séparant les faisceaux de sortie de ce séparateur.

Un dièdre 125 d'arête horizontal permet de réaliser un passage quadruple des faisceaux sur le réseau 101, la lumière atteignant le rétroréflecteur auto-aligné 111 après deux passages sur ce réseau.

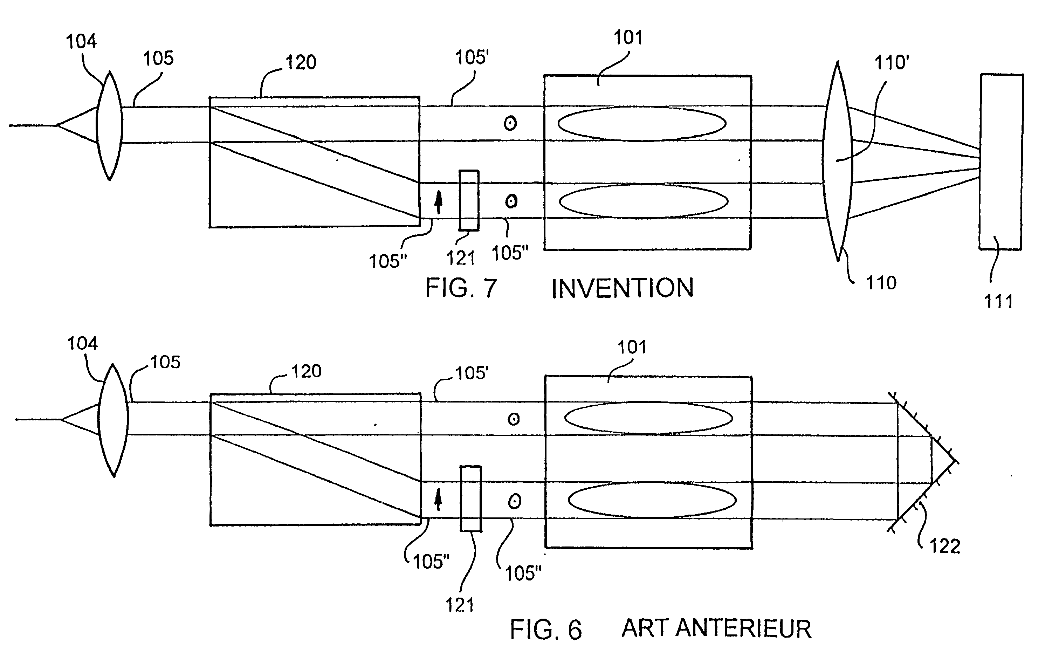

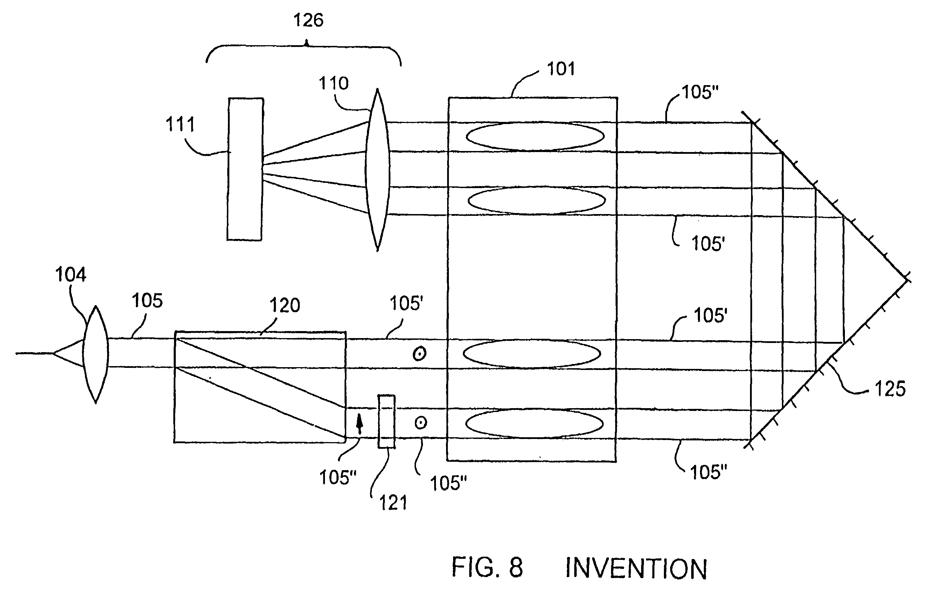

Ce mode de réalisation est plus particulièrement décrit en référence aux figures 6, 7 et 8.

La figure 6 représente un dispositif de l'art antérieur tel que décrit, par exemple dans la demande de brevet FR-2.754.054. Le séparateur de polarisation 120 produit à partir du faisceau 105 deux faisceaux parallèles de polarisation orthogonale 105' et 105". Une lame λ/2 121 est placée sur le faisceau 105" et fait tourner la direction de polarisation du faisceau, de telle sorte que les deux faisceaux 105' et 105"' ont une direction de polarisation perpendiculaire aux traits du réseau 101. Après dispersion de ces deux faisceaux par le réseau 101, ceux-ci sont échangés par le dièdre 122. Ce dispositif qui a été décrit en détail dans le brevet français FR-2.754.054, dans un analyseur de spectre optique, permet la réalisation d'un dispositif dans lequel les pertes engendrées par la diffraction sur le réseau sont minimisées et, en même temps, il permet la réalisation d'un dispositif de grande précision, insensible à la polarisation du faisceau incident 105.

Selon la présente invention, il est possible de remplacer le dièdre 122 par l'ensemble constitué par la lentille 110 et le dièdre 111.

On obtient ainsi tous les avantages du dispositif précédemment décrit en même temps que l'on s'affranchit de la contrainte sur l'angle du dièdre 122 puisque, comme on l'a déjà exposé plus haut, l'ensemble constitué par la lentille 110 et le dièdre 111 fonctionne convenablement même si l'angle du dièdre 111 n'est qu'approximativement de 90°.

Dans ce même brevet français FR-2.754.054, il a été décrit un " troisième mode de réalisation " mettant en oeuvre une configuration à quatre passages du faisceau sur le réseau, en un montage à double étage.

Dans ce dispositif, un dièdre 125, de grande dimension par rapport à la dimension transverse des faisceaux, les renvoie, après leur premier passage sur le réseau de façon à ce qu'ils soient à nouveau diffractés par celui-ci et le système optique rétroréfléchissant auto-aligné 126 échange ces faisceaux l'un avec l'autre et les renvoie à nouveau vers le réseau en sorte qu'il sont à nouveau chacun diffracté deux fois.

Le système optique rétroréfléchissant auto-aligné 126 est avantageusement conforme à la présente invention et donc constitué d'une lentille 110 dans le plan focal de laquelle est placé un dièdre 111 dont l'arête est perpendiculaire au plan de dispersion du réseau.

Dans un mode de réalisation alternatif, on pourrait utiliser un réseau concave à la place du réseau plan 101, le réseau assurant lui-même la collimation du faisceau issu du guide d'onde 103 ou la convergence sur le dièdre 111 et permettant la suppression respective du système optique 104 ou 110.

## Revendications

1. Système optique rétroréfléchissant auto-aligné à une dimension, de filtrage en longueur d'onde, comportant :
- une optique de collimation (104),
- au moins un guide d'onde (103) ayant une face intérieure dans le plan focal de ladite optique de collimation (104) générant un faisceau collimaté principal,
- un réseau de diffraction (101) ayant des traits parallèles et dispersant angulairement, en des faisceaux collimatés, les différentes longueurs d'onde du faisceau principal dans des directions parallèles au plan de dispersion qui est perpendiculaire aux traits du.réseau,
- un système réflecteur (110 et 111) générant un auto-alignement à une dimension dans le plan longitudinal perpendiculaire au plan de dispersion,
**caractérisé en ce que** le réflecteur est composé d'un objectif sphérique (110) et d'un système réflecteur (111) auto-aligné à une dimension, ladite dimension étant parallèle au plan de dispersion du réseau, et ledit reflecteur (111) étant positionné au plan focal de l'objectif (110).

2. Système optique rétroréfléchissant auto-aligné selon la revendication 1, **caractérisé en ce que** le système réflecteur auto-aligné à une dimension est un dièdre réflecteur dont l'arête est perpendiculaire au plan de dispersion du réseau et est placée dans le plan focal de l'objectif.

3. Système optique rétroréfléchissant auto-aligné selon la revendication 2, **caractérisé en ce que** le dièdre réflecteur est un prisme à double réflexion interne totale.

4. Système optique rétroréfléchissant auto-aligné selon l'une des revendications 2 et 3, **caractérisé en ce que** le dièdre réflecteur forme un angle de 90° approximativement.

5. Système optique rétroréfléchissant auto-aligné selon l'une quelconque des revendications 2 à 4, **caractérisé en ce qu'**au moins un des deux miroirs du dièdre réflecteur a des dimensions latérales réduites.

6. Système optique rétroréfléchissant auto-aligné selon l'une quelconque des revendications 1 à 5, **caractérisé en ce que** la taille des modes des guides d'onde est élargie.

7. Système optique rétroréfléchissant auto-aligné selon l'une quelconque des revendications 1 à 6, **caractérisé en ce qu'**un séparateur de polarisation à sorties parallèles est inséré entre l'optique de collimation et le réseau et que le centre (110') de l'objectif (110) est positionné au milieu de l'espace séparant les faisceaux de sortie de ce séparateur.

8. Système optique rétroréfléchissant auto-aligné selon l'une quelconque des revendications 1 à 7, **caractérisé en ce qu'**un dièdre additionnel (125) d'arête parallèle au plan de dispersion conduit à un passage quadruple sur le réseau, la lumière atteignant le rétroréflecteur auto-aligné après deux passages sur le réseau.

9. Monochromateur incorporant un système optique rétroréfléchissant auto-aligné selon l'une des revendications 1 à 8, **caractérisé en ce qu'**un guide d'onde est passif et forme la fente d'entrée et la fente de sortie du monochromateur.

10. Monochromateur incorporant un système optique rétroréfléchissant auto-aligné selon l'une des revendications 1 à 8, **caractérisé en ce qu'**un premier guide d'onde passif forme la fente d'entrée du monochromateur et qu'un deuxième guide d'onde passif forme sa fente de sortie.

11. Laser incorporant un système optique rétroréfléchissant auto-aligné selon l'une des revendications 1 à 8, **caractérisé en ce qu'**un guide d'onde définit ledit laser à cavité externe accordable en longueur d'onde entre son extrémité externe et le système réflecteur auto-aligné à une dimension.

## Patentansprüche

1. Selbstausrichtendes retroreflektierendes eindimensionales optisches System zur Wellenlängenfilterung, welches aufweist:
- eine Kollimatoroptik (104),
- wenigstens einen Wellenleiter (103) mit einer Innenseite in der Brennpunktebene der genannten Kollimatoroptik (104), welche einen kollimierten Hauptstrahl generiert,
- ein Diffraktionsnetz (101) mit parallelen Lichtstrahlen, welches eine Streuung im Winkel verursacht in kollimierte Strahlen, mit unterschiedlichen Wellenlängen des Hauptstrahls in Richtungen parallel zur Streuebene, welche parallel zu den Lichtstrahlen des Netzes ist,
- ein Reflektorsystem (110 und 111), welches eine eindimensionale Selbstausrichtung in der Longitudinalebene senkrecht zur Streuebene generiert,
**dadurch gekennzeichnet, dass** der Reflektor aus einem kugelförmigen Objektiv (110) und aus einem eindimensionalen selbstausrichtenden Reflektorsystem (111) besteht, wobei die genannte Dimension parallel zur Streuebene des Netzes ist und der genannte Reflektor (111) in der Brennpunktebene des Objektivs (110) angeordnet ist.

2. Selbstausrichtendes retroreflektierendes optisches System nach Anspruch 1, **dadurch gekennzeichnet, dass** das selbstausrichtende eindimensionale Reflektorsystem ein Reflektorwinkel ist, dessen Kante senkrecht zur Streuebene des Netzes ist und in der Brennpunktebene des Objektivs angeordnet ist.

3. Selbstausrichtendes retroreflektierendes optisches System nach Anspruch 2, **dadurch gekennzeichnet, dass** der Reflektorwinkel ein Prisma mit doppelter interner Totalreflexion ist.

4. Selbstausrichtendes retroreflektierendes optisches System nach einem der Ansprüche 2 oder 3, **dadurch gekennzeichnet, dass** der Reflektorwinkel einen Winkel von ungefähr 90° bildet.

5. Selbstausrichtendes retroreflektierendes optisches System nach einem der Ansprüche 2 bis 4, **dadurch gekennzeichnet, dass** wenigstens einer der beiden Spiegel des Reflektorwinkels verkleinerte seitliche Dimensionen aufweist.

6. Selbstausrichtendes retroreflektierendes optisches System nach einem der Ansprüche 1 bis 5, **dadurch gekennzeichnet, dass** die Dimension der Wellenleitermoden vergrößert ist.

7. Selbstausrichtendes retroreflektierendes optisches System nach einem der Ansprüche 1 bis 6, **dadurch gekennzeichnet, dass** zwischen der Kollimatoroptik und dem Netz ein Polarisationsseparator mit parallelen Ausgängen angeordnet ist und das der Mittelpunkt (110') des Objektivs (110) am Mittelpunkt der Strecke zwischen den Ausgangsstrahlen dieses Separators angeordnet ist.

8. Selbstausrichtendes retroreflektierendes optisches System nach einem der Ansprüche 1 bis 6, **dadurch gekennzeichnet, dass** ein zusätzlicher Reflektorwinkel (125) mit einer Kante parallel zur Streuebene zu einem vierfachen Durchfluss durch das Netz führt, wobei das Licht den selbstausrichtenden Retroreflektor nach zweimaliger Durchquerung des Netzes erreicht.

9. Monochromator, beinhaltend ein selbstausrichtendes retroreflektierendes optisches System nach einem der Ansprüche 1 bis 8, **dadurch gekennzeichnet, dass** ein Wellenleiter passiv ist und den Eingangsschlitz und den Ausgangsschlitz des Monochromators bildet.

10. Monochromator, beinhaltend ein selbstausrichtendes retroreflektierendes optisches System nach einem der Ansprüche 1 bis 8, **dadurch gekennzeichnet, dass** ein erster passiver Wellenleiter den Eingangsschlitz des Monochromators und ein zweiter passiver Wellenleiter seinen Ausgangsschlitz bildet.

11. Laser, beinhaltend ein selbstausrichtendes retroreflektierendes optisches System nach einem der Ansprüche 1 bis 8, **dadurch gekennzeichnet, dass** ein Wellenleiter den genannten Laser mit externem Resonator definiert, welcher zwischen seinem Außenendpunkt und dem eindimensionalen selbstausrichtenden reflektierenden optischen System in seiner Wellenlänge einstellbar ist.

## Claims

1. A single dimension self-aligned retroreflecting optical system for wavelength filtering, comprising:
- a collimation optics (104),
- at least one wave guide (103) with one internal face in the focal plane of said collimation optics (104) generating a main collimated beam,
- a diffraction grating (101) with parallel lines dispersing angularly, in collimated beams, the different wavelengths of the main beam in directions parallel to the dispersing plane that is perpendicular to the lines of the grating,
- a reflector system (110 and 111) generating a single dimension self-alignment in the longitudinal plane perpendicular to the dispersing plane,
**characterised in that** the reflector comprises a spherical lens (110) and a single dimension self-aligned reflector system (111), whereas the said dimension is parallel to the dispersing plane of the grating and said reflector (111) is located in the focal plane of the lens (110).

2. A self-aligned retroreflecting optical system according to claim 1, **characterised in that** the single dimension self-aligned reflector system is a reflector dihedron whose edge is perpendicular to the dispersing plane of the grating and is located in the focal plane of the lens.

3. A self-aligned retroreflecting optical system according to claim 2, **characterised in that** the reflector dihedron is a double total internal reflection prism.

4. A self-aligned retroreflecting optical system according to one of claims 2 and 3, **characterised in that** the reflector dihedron forms an angle of about 90°.

5. A self-aligned retroreflecting optical system according to any one of claims 2 to 4, **characterised in that** at least one of both mirrors of the reflector dihedron has reduced lateral sizes.

6. A self-aligned retroreflecting optical system according to any one of claims 1 to 5, **characterised in that** the size of the wave-guide modes is broader.

7. A self-aligned retroreflecting optical system according to any one of claims 1 to 6, **characterised in that** a polarisation splitter with parallel outputs is inserted between the collimation optics and the grating and that the centre (110') of the lens (110) is located in the middle of the space between the output beams of this splitter.

8. A self-aligned retroreflecting optical system according to any one of claims 1 to 7, **characterised in that** an additional dihedron (125) with its edge parallel to the dispersing plane leads to a quadruple passage on the grating, whereas the light reaches the self-aligned retroreflector after two passages on the grating.

9. A monochromator incorporating a self-aligned retroreflecting optical system according to one of claims 1 to 8, **characterised in that** a wave-guide is passive and forms the input slot and the output slot of the monochromator.

10. A monochromator incorporating a self-aligned retroreflecting optical system according to one of claims 1 to 8, **characterised in that** a first passive wave-guide forms the input slot of the monochromator and a second passive wave-guide forms its output slot.

11. A laser incorporating a self-aligned retroreflecting optical system according to one of claims 1 to 8, **characterised in that** a wave-guide delineates the said wavelength tuneable external cavity laser between its external extremity and the single dimension self-aligned reflector system.
